# FASCICULE DE BREVET EUROPEEN

(11) **EP 0 705 394 B1**
(45) Date de publication et mention de la délivrance du brevet: **19.05.1999**
(21) Numéro de dépôt: 95914434.6
(22) Date de dépôt: 29.03.1995
(51) Int. Cl.: F16D 13/71

(54) **MECANISME D'EMBRAYAGE, NOTAMMENT POUR VEHICULE AUTOMOBILE**
KUPPLUNGSMECHANISMUS INSBESONDERE FÜR KRAFTFAHRZEUGE
CLUTCH MECHANISM, IN PARTICULAR FOR MOTOR VEHICLES

(30) Priorité: 30.03.1994 FR 9403748
(43) Date de publication de la demande: 10.04.1996
(73) Titulaire: VALEO, 75017 Paris (FR)
(72) Inventeur: VILLATA, Gino, I-140241 Buttigliera d'Asti (IT); GIROIRE, Jean-Pierre, F-78100 Saint-Germain-en-Laye (FR)
(74) Mandataire: Gamonal, Didier
(86) Numéro de dépôt international: FR9500390
(87) Numéro de publication internationale: WO9527154

(56) Documents cités:
- FR-A- 1 524 350
- FR-A- 2 385 944
- FR-A- 2 548 301
- GB-A- 2 044 866
- GB-A- 2 165 321
- GB-A- 2 177 466
- US-A- 3 939 951

## Description

La présente invention concerne les mécanismes d'embrayage à diaphragme tel que décrit par exemple dans le document FR-A-1 524 350.

Un tel mécanisme forme un ensemble unitaire et comporte un couvercle propre à être rapporté sur le plateau de réaction de l'embrayage, un diaphragme monté sur le couvercle par l'intermédiaire de moyens de pivotement assujettissant de manière pivotante le diaphragme au couvercle, un plateau de pression lié en rotation au couvercle tout en étant monté axialement mobile par rapport à celui-ci par l'intermédiaire de moyens d'attelage, tels que des languettes élastiques tangentielles.

Dans ce type de mécanisme le diaphragme prend appui sur le couvercle pour action sur le plateau de pression afin de solliciter celui-ci en éloignement du couvercle.

Plus précisément les moyens de pivotement comportent des colonnettes fixées au couvercle et présentant une tête profilée pour offrir un appui à la partie périphérique, en forme de rondelle Belleville, du diaphragme.

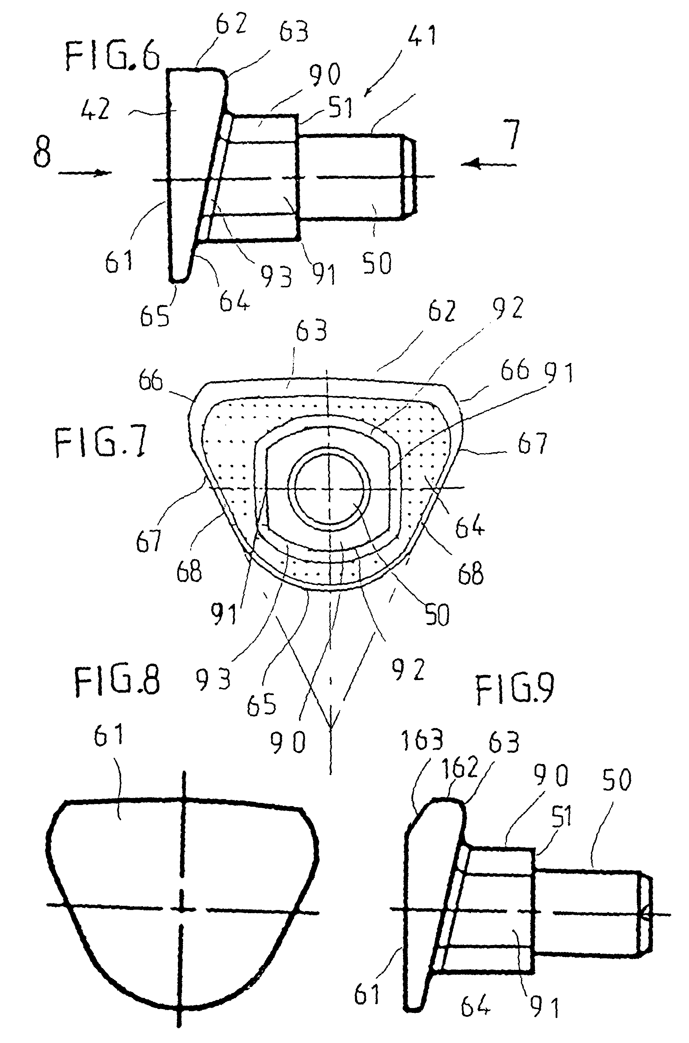

Les colonnettes traversent des orifices 23 (figure 5) élargis formés dans la zone d'enracinement des doigts 22 du diaphragme à la partie rondelle Belleville 21 de celui-ci.

Ces orifices sont dits élargis car ils forment l'une des extrémités des fentes 24 séparant deux à deux les doigts 22.

Ces orifices ont globalement une forme rectangulaire avec des bords latéraux 25 destinés à coopérer avec une portion de guidage de forme annulaire, ici cylindrique, que présente la colonnette entre sa tête et son pied.

En pratique on a constaté que des phénomènes d'usure se produisent au niveau de cette portion de guidage. Cela est dû au fait, que le diaphragme est une pièce durcie. Dans le document FR-A-2 548 301 il est prévu des colonnettes avec une portion entaillée pour coopérer avec des éléments de compensation s'appuyant sur le diaphragme. Rien n'indique que ces portions sont des portions de guidage.

La présente invention a pour objet de pallier cet inconvénient.

Suivant l'invention un mécanisme du type sus-indiqué est caractérisé en ce que sa portion de guidage est entaillée pour formation de deux bords latéraux globalement en forme de méplats coopérant avec les bords latéraux des orifices élargis du diaphragme et en ce que la portion guidage est durcie.

Ainsi les usures desdites portions de guidage sont réduites par augmentation des surfaces de contact, au bénéfice d'un meilleur fonctionnement du diaphragme du fait que ces bords latéraux ont une hauteur supérieure à l'épaisseur du diaphragme.

Le mécanisme a donc une meilleure fiabilité, sa durée de vie étant augmentée.

On notera que les bords sont globalement en forme de méplats car ils peuvent être légèrement convexes, notamment lorsque les colonnettes sont réalisées par forgeage. Les bords latéraux sont donc globalement parallèles entre eux.

Ces colonnettes sont durcies, par exemple par une opération de trempe et de revenu.

En variante les colonnettes peuvent être en deux parties à savoir une première partie réalisant les fonctions d'articulation et de guidage du diaphragme et une seconde partie, sous forme d'un rivet, traversant la première partie pour fixation de la colonnette au fond du couvercle.

Cette disposition est particulièrement avantageuse car la première partie peut être aisément durcie, en étant par exemple réalisée en acier fritté, tandis que la deuxième partie est réalisée à l'aide d'un rivet standard, non durci, permettant une fixation aisée des colonnettes.

Cette deuxième partie supporte seulement des efforts de traction.

Le rivet peut avoir ainsi une section plus réduite que lorsque la colonnette est monobloc.

Ce rivet est également long ce qui permet de réaliser un serrage du diaphragme du type élastique entre ses appuis de basculement, ce qui est utile pour réduire au minimum les frottements parasites de l'articulation du diaphragme.

En outre on peut réduire la taille de la colonnette dans sa partie basse, ce qui est particulièrement avantageux, de la place étant laissée pour le disque de friction.

La description qui va suivre illustre l'invention en regard des dessins annexés dans lesquels :
- la figure 1 est une vue en coupe axiale d'un mécanisme selon l'invention ;
- la figure 2 est une vue partielle à plus grande échelle d'une partie du mécanisme de la partie haute de la figure 1 ;
- la figure 3 est une vue selon la flèche 3 de la figure 1 avec arrachement local pour montrer le plateau de pression ;
- la figure 4 est une vue en plan d'un crochet ;
- la figure 5 est une vue en plan d'un diaphragme ;
- la figure 6 est une vue en plan d'une colonnette selon l'invention à grande échelle ;
- la figure 7 est une vue selon la flèche 7 de la figure 6 ;
- la figure 8 est une vue selon la flèche 8 de la figure 6 ;
- la figure 9 est une vue analogue à la figure 6 pour un deuxième exemple de réalisation ;
- la figure 10 est une demi-vue en coupe axiale d'un embrayage à friction équipé d'une colonnette en deux parties pour un troisième exemple de réalisation ;
- la figure 11 est une vue en coupe axiale d'une des parties de la colonnette ;
- la figure 12 est une vue selon la flèche 12 de la figure 10 de cette colonnette.

Dans ces figures est illustré un mécanisme d'embrayage à diaphragme destiné à l'équipement d'un véhicule automobile.

Ce mécanisme forme un ensemble unitaire et comporte des pièces annulaires à savoir un couvercle 1, ici en tôle emboutie, un plateau de pression 3, usuellement en fonte, et un diaphragme 2.

Il comporte également des languettes élastiques tangentielles 8, des organes de fixation 35,85 et des crochets de rappel 5 décrits ci-après.

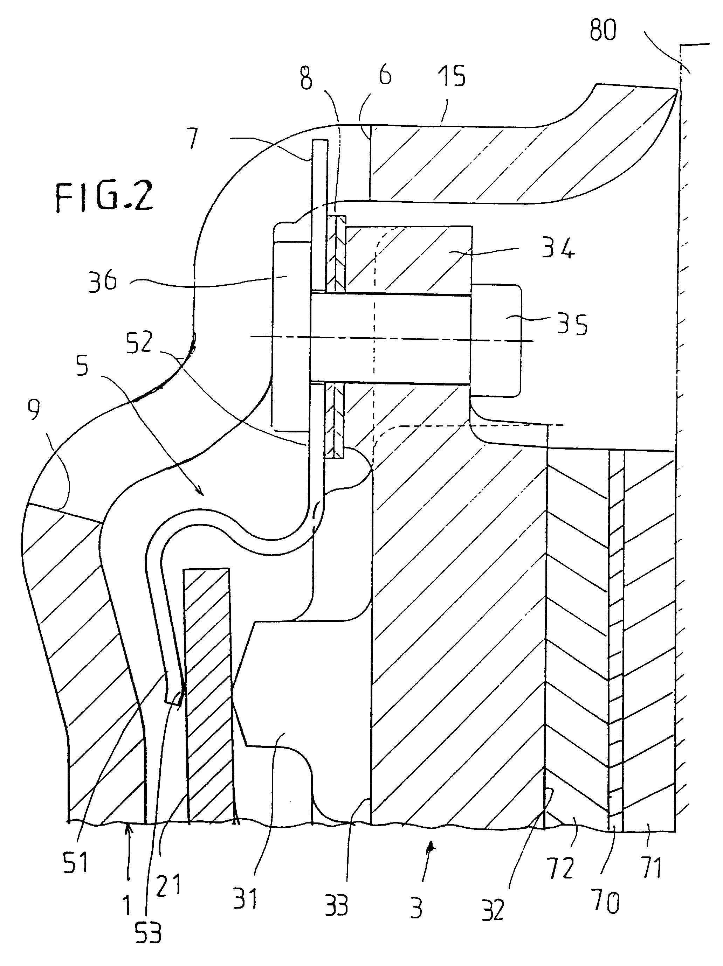

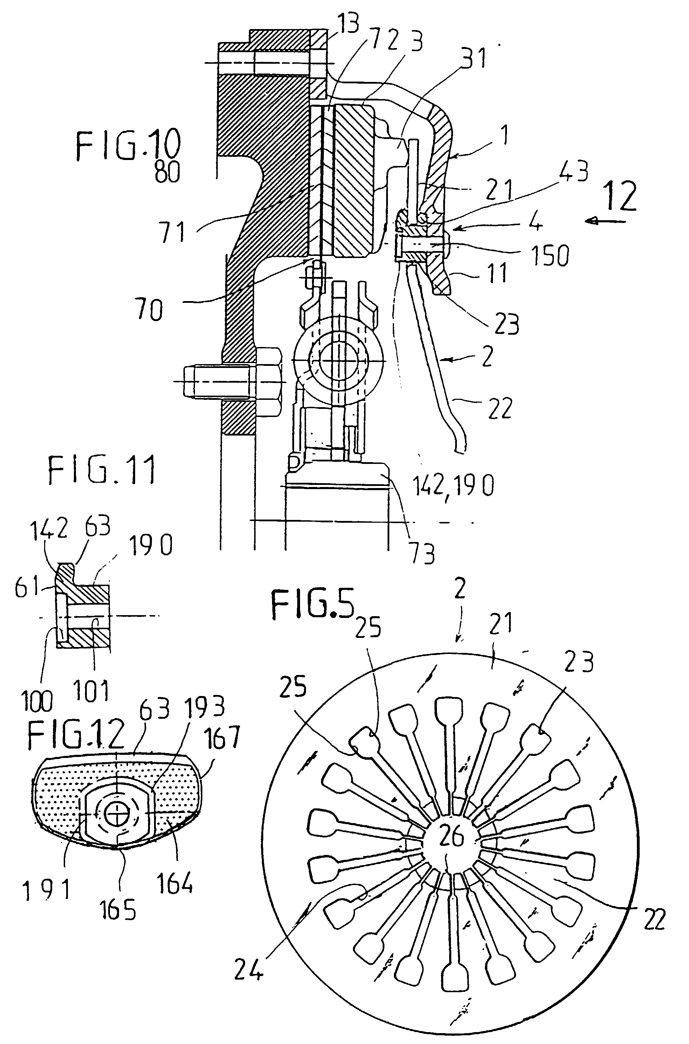

Ce mécanisme est destiné à être rapporté par son couvercle 1, ici en forme d'assiette creuse avec un fond 11 troué centralement, sur un plateau de réaction 80 (figures 2 et 10) avec interposition d'un disque de friction 70 (figures 2 et 10) portant à fixation des garnitures de friction 72,71, éventuellement fractionnées, montées de part et d'autre de celui-ci.

Le plateau de réaction, éventuellement en deux parties, est destiné à être calé en rotation sur le vilebrequin du moteur du véhicule, tandis que le disque 70 est destiné à être calé en rotation, par l'intermédiaire d'un moyeu 73 (figure 10), sur l'arbre d'entrée de la boîte de vitesses.

Le diaphragme 2 est monté sur le couvercle 1 par l'intermédiaire de moyens de pivotement 4 assujettissant de manière pivotante le diaphragme 2 au couvercle 1.

Le plateau de pression 3 est lié en rotation au couvercle 1 tout en étant monté mobile axialement par rapport à celui-ci, de manière connue en soi, par l'intermédiaire de moyens d'attelage ici sous la forme de languettes élastiques tangentielles 8.

En variante on peut utiliser une liaison du type tenons-mortaises, le plateau de pression 3 portant des tenons, sous forme de pattes, engagés dans des mortaises, sous forme de rainures, prévues dans la jupe 12 du couvercle, décrite ci-après.

Des crochets de rappel 5 sont prévus pour atteler le diaphragme 2 au plateau de pression 3 par pincement de la périphérie externe du diaphragme 2, en forme de rondelle Belleville 21, entre lesdits crochets 5 et un bossage d'appui 31, que présente le plateau de pression 3 à sa périphérie externe pour appui du diaphragme 2.

Des organes de fixation 35 sont prévus pour la fixation des languettes 8, ici métalliques, et des crochets de rappel 5, également métalliques, à des pattes 34, que présente le plateau de pression 3 radialement en saillie à sa périphérie externe.

Plus précisément le couvercle 1 présente, outre le fond 11 précité, un rebord radial 13 pour sa fixation au plateau de réaction 80, et une jupe annulaire 12, avec une partie principale globalement d'orientation axiale, raccordant le rebord de fixation 13 au fond 11.

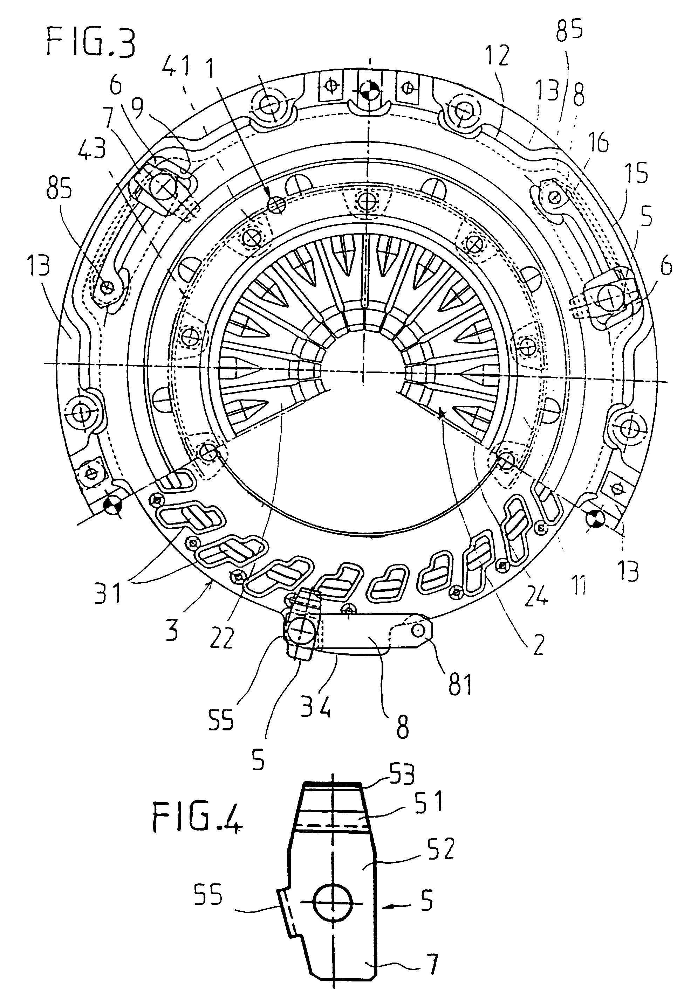

Ce rebord 13 est fractionné en plages de fixation (figure 3), qui comportent des trous 14 pour montage d'organes de fixation (non visibles), tels que des vis ou des rivets, permettant la fixation du couvercle 1, et du mécanisme au plateau 80.

Le fond 11 du couvercle 1 porte une pluralité de colonnettes 41 présentant une tête 42 (figure 6), 142 (figures 10 et 11) et portant un jonc annulaire 43.

Le diaphragme 2 (figure 5) présente, outre sa partie périphérique 21, une partie centrale fragmentée en doigts radiaux 22 par des fentes 24 s'élargissant au niveau de la zone d'enracinement des doigts 22 à la rondelle Belleville 21 pour formation d'orifices élargis 23 traversés par le fût central des colonnettes 41.

Les fentes 24 débouchent donc à l'une de leur extrémité dans les orifices élargis 23, formés à la périphérie interne de la rondelle Belleville 21, et à leur autre extrémité dans une ouverture centrale 26, que présente centralement le diaphragme, pour passage notamment de l'arbre d'entrée de la boîte de vitesses.

Ainsi les colonnettes 41 forment avec le jonc 43 des moyens assujettissant de manière pivotante le diaphragme 2 au couvercle 1. Ces moyens sont ici peu encombrants axialement, ce qui favorise une réduction de la taille axiale des trous de montage 9 des crochets décrits ci-après.

Ici la tête 42,142, à extrémité 63 arrondie, offre un appui secondaire au diaphragme 2 en regard du jonc 43 formant un appui primaire. En variante le jonc 43 peut être remplacé par un embouti formé dans le fond 11 du couvercle.

D'une manière générale le diaphragme est monté de manière pivotante entre l'appui primaire 43 et l'appui secondaire 42,142.

Pour ce faire la colonnette 41, outre sa tête 42,142, présente une portion de guidage 90,190, pour guidage et centrage du diaphragme, et un pied 50,150 pour liaison de la colonnette 41 au fond 11 du couvercle.

La portion de guidage 90,190 pénètre dans les ouvertures 23 et est propre à coopérer avec les bords latéraux 25 de ladite ouverture 23, ici globalement de forme rectangulaire.

On notera que cette coopération permet de centrer le diaphragme et de le guider lors de son mouvement de basculement, de manière décrite ci-après.

Par ailleurs l'extrémité avant de cette portion 90,190 sert au calage axial de la colonnette 41 par appui sur le fond 11.

Pour mémoire on rappellera que lorsque l'embrayage est engagé - garnitures de frottement 72,71 serrées entre la face avant de friction 32 du plateau de pression 3 et le plateau de réaction 80 - le diaphragme 2 prend appui par la partie périphérique interne de sa rondelle Belleville 21 sur l'appui primaire 43, et par la périphérie externe de sa rondelle Belleville 21 sur le bossage d'appui 31 du plateau de pression 3. Ce bossage 31, porté par la face arrière 33 du plateau 3, tournée vers le fond 11, est ici fragmenté en segments annulaires.

Pour désengager l'embrayage (et donc desserrer les garnitures 72,71), de manière connue en soi, on appuie en poussant à l'aide d'une butée de débrayage (non représentée) sur l'extrémité interne des doigts 22 du diaphragme 2 pour faire pivoter celui-ci.

Lors de cette opération le diaphragme prend appui sur l'appui secondaire 63 et les crochets 5 rappellent le plateau de pression 3 en direction du fond 11 du couvercle du fait que le diaphragme est pincé ici élastiquement entre lesdits crochets 5 et le bossage 31.

Ici la jupe 12 entoure le plateau de pression 3 avec ses oreilles 34 et les languettes 8 participent également au rappel du plateau 3 en direction du couvercle.

Cette jupe est étagée radialement pour présenter des plages 15 à la périphérie externe du couvercle.

Ces plages 15 d'orientation axiale alternent circonférentiellement avec les plages de fixation du rebord 13 (figure 3). Les plages 15 entourent les pattes 34 du plateau 3. Ces pattes 34 sont allongées circonférentiellement (figure 3).

Pour mémoire on rappellera que ces languettes 8 élastiques, s'étendant globalement tangentiellement à une circonférence de l'ensemble (figure 3), sont fixées à l'une de leurs extrémités par les organes de fixation 35 aux pattes radiales 34 du plateau 3 et à leur autre extrémité par des seconds organes de fixation 85 à des pattes 16, que présente le couvercle 11.

Ces pattes 16 sont décalées axialement par rapport au fond 11 du couvercle et ce en direction opposée audit fond 11. Pour ce faire (figure 3) ces pattes 16 sont délimitées par les ouvertures affectant la jupe 12.

Ici les languettes 8 sont montées par paire et les organes de fixation 35,85 consistent en des rivets.

Trois jeux de paires de languettes et trois crochets sont prévus, ici répartis à 120° les uns par rapport aux autres.

Bien entendu ce nombre, ainsi que celui des crochets, est non limitatif et dépend des applications.

Pour montage des crochets 5 et des organes de fixation 35, traversant les crochets 5 - les languettes 8 et les pattes 34 à la faveur de trous que présentent à cet effet lesdites pièces (figure 2), le couvercle 1 présente des trous de montage 9 à raison de un trou par crochets 5, paire de languettes 8 et organe 35.

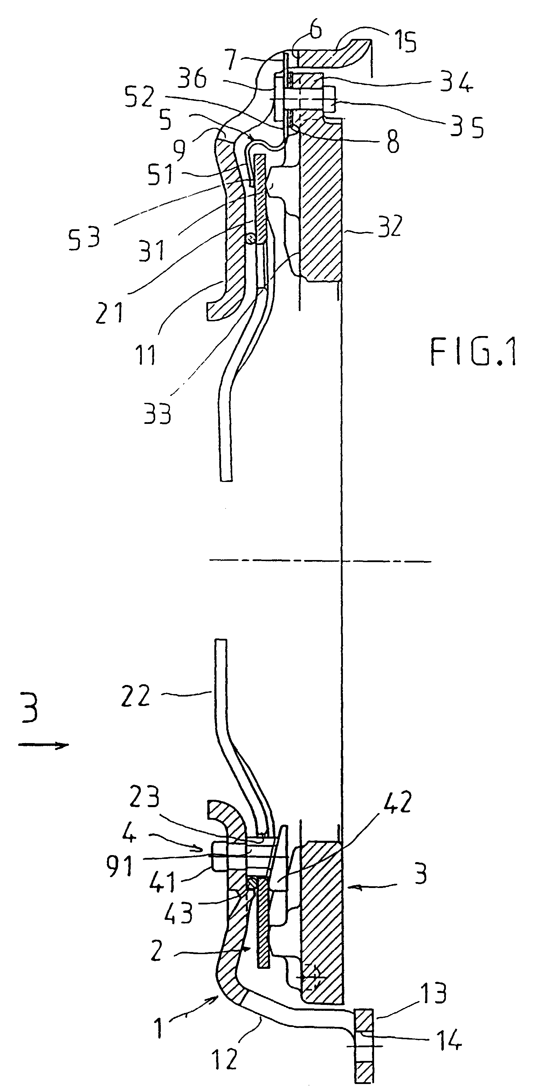

Ces trous 9 affectent le fond 11 ainsi que la zone arrondie de raccordement du fond 11 avec sa jupe 12. Ces trous 9 comportent donc un bord avant 6 le plus éloigné axialement par rapport au fond 11 du couvercle affectant les plages 15 de la jupe 12 dotée ici par ailleurs d'orifices de ventilation dont un est visible dans la partie basse de la figure 1.

Les crochets de rappel 5 présentent une semelle 52, d'orientation transversale, prolongée radialement vers l'intérieur par une partie sinueuse 51 contournant le diaphragme (la périphérie externe de celui-ci) pour présenter un bourrelet d'appui 53 en regard du bossage 31 de forme pointue. La partie 51, de forme trapézoïdale (figure 4), est donc élastique ce qui permet un pincement ponctuel du diaphragme entre le bourrelet 53 et le bossage 31. Ici la tête 36 des rivets 35 prend appui sur la semelle 52 pour serrer les languettes 8 entre la patte 34 et la semelle 52. En variante les organes 35 peuvent consister en des boulons ou en des pions, dont le fût est monté à force dans un trou borgne, que présentent alors les pattes 34.

Lorsque l'embrayage est engagé à l'état neuf, garnitures 71,72 neuves, la rondelle Belleville du diaphragme, de forme tronconique à l'état libre, s'étend globalement transversalement.

Par contre à l'état libre - dit aussi position de stockage - (mécanisme non monté sur le plateau 80), le diaphragme s'incline et sollicite le plateau 3 en direction opposée du fond 11 c'est-à-dire vers l'extérieur. Les languettes 8 se cambrent alors.

Si aucune mesure n'est prise dans certain cas, on peut dépasser la limite élastique des languettes, notamment lorsque l'on fait tomber le mécanisme (du fait de l'inertie du plateau de réaction).

Pour éviter cela, on prolonge ici radialement vers l'extérieur au moins un crochet 5 pour formation d'une butée 7 propre à venir en appui contre une contrebutée 6 formée par le bord avant 6 des trous de montage 9 le plus éloigné du fond 11 du couvercle.

Ici la contrebutée 6 affecte de manière précitée la plage 15 de la jupe 12.

Ici trois plages 15 sont prévues à raison de une par crochet et languette en étant régulièrement réparties circonférentiellement.

Bien entendu cela dépend des applications.

C'est donc la semelle 52, qui est prolongée radialement vers l'extérieur pour former la butée 7, qui s'engage à jeu circonférentiel dans le trou 9.

Le crochet 5 présente latéralement une patte pliée 55 issue de sa semelle 52 (figure 5). Cette patte est dirigée axialement et est propre à coopérer avec la tranche de l'extrémité libre concernée 81 de la languette 8.

Cette extrémité 81 a une forme globalement trapézoïdale.

Ainsi le crochet 5 est immobilisé en rotation par coopération de formes et ne risque pas de tourner.

On notera que la position latérale de la patte 55 permet la formation de la butée 7.

En variante, non représentée, on peut prolonger latéralement le crochet qui est alors admis à venir buter contre le bord latéral concerné du trou 9, avantageusement le bord latéral le plus proche de l'extrémité libre des languettes 8.

Ceci étant rappelé, lors du mouvement du diaphragme, par exemple lorsque l'on passe de la position embrayage engagé à la position embrayage désengagé, un mouvement relatif générateur d'usure se produit entre les bords latéraux 25 des ouvertures et les portions de guidage 90,190 des colonnettes 41.

Pour réduire ces usures, l'invention propose d'entailler la portion de guidage 90,190 pour formation de deux bords 91,191 latéraux globalement en forme de méplats destinés à coopérer avec les bords latéraux 25 des orifices élargis 23 du diaphragme.

Grâce à cette disposition la surface de contact, qu'offre les colonnettes 41 aux bords latéraux 25 du diaphragme 2, est augmentée entraînant ainsi une réduction des usures.

Dans les figures 1 à 9, les doigts 22 sont nervurés, ladite nervure se prolongeant dans la partie périphérie 21 du diaphragme.

Ici ces nervures sont réalisées par emboutissage des doigts 22 vers l'intérieur c'est-à-dire en direction du plateau 3.

Ainsi les doigts 22 sont rigidifiés et la levée du plateau de pression est meilleure lors du désengagement de l'embrayage. Ces doigts 22 ont une forme sinueuse avec une partie interne décalée axialement par rapport à leur partie externe par l'intermédiaire d'une partie inclinée.

A la figure 10, les doigts 22 du diaphragme ne sont pas nervurés et sont inclinés par rapport à la partie rondelle Belleville 21 du diaphragme. Ils sont bombés à leur extrémité interne pour coopération avec la butée de débrayage.

Dans tous les cas les ouvertures 23 ont une forme globalement rectangulaire avec deux bords latéraux 25 parallèles entre eux tout comme les bords 91,191.

Ces ouvertures ou orifices 23 sont donc des orifices de passage pour les colonnettes 41.

Dans les figures 1 à 9, les colonnettes 41 sont monoblocs, tandis que dans les figures 10 à 12 les colonnettes sont en deux parties.

Dans les figures 1 à 9, les colonnettes présentent donc un pied 50 adapté à traverser une ouverture associée prévue dans le fond 11 du couvercle (figure 1).

L'extrémité libre de ce pied est destinée à être épanouie pour fixation par rivetage de la colonnette 41 au fond 11.

Ce pied 50 est ici de forme annulaire mais bien entendu comme décrit dans le susmentionné document FR-A-1 524 350, il peut être de section rectangulaire tel que carré pour blocage en rotation de la colonnette et indexation de celle-ci.

La portion de guidage 90 est de taille supérieure à celle du pied 50 en étant de taille inférieure à la tête 42. Ici la tête 42 a une taille supérieure à celle de l'orifice 33.

Ainsi il est créé à l'extrémité arrière du pied 50 un épaulement 51 à la faveur de la portion 90. La position de l'épaulement 51 dépend de l'épaisseur du jonc 43. En pratique un léger jeu existe entre les appuis secondaire et primaire pour permettre un basculement du diaphragme entre ces appuis, de manière connue en soi.

La tête 42 est délimitée par une face dorsale arrière 61, la plus éloignée du fond 11 du couvercle 1. Cette face 61 s'étend transversalement, donc perpendiculairement à l'axe de symétrie axiale du pied 50.

La tête 42 est délimitée également par une face avant 64, une face supérieure 62,63, une face inférieure 65, deux bords latéraux 67 et par des arrondis 66 raccordant la face supérieure 62,63 aux bords latéraux 67.

La face avant 64 est de forme conique, en sorte que la tête 42 est plus large dans sa partie supérieure que dans sa partie inférieure.

Le bord inférieur 65 est de forme globalement semi-circulaire, tandis que les bords latéraux 67 sont inclinés (figure 7) et se recoupent sur l'axe de symétrie transversal de la colonnette 41.

Ici cette colonnette 41 est réalisée par forgeage, en sorte qu'il existe des congés de raccordement 68 entre la face 64 et les bords 67 et 65.

Une zone de raccordement 93 existe entre la face 64 et la portion de guidage 90.

La face supérieure 62 est circonférentiellement de forme légèrement arquée (figure 7) et se raccorde à la face 64 par une zone arrondie 63 et circonférentiellement arquée formant l'appui secondaire.

La portion de guidage présente en section deux bords latéraux 91, en forme de méplats, raccordés entre eux par deux bords semi-circulaires 92 du fait qu'initialement la portion 90 est de forme annulaire, ici cylindrique, et est entaillée pour formation des deux méplats 91.

Ces méplats peuvent être très légèrement convexes notamment lorsque la colonnette est réalisée par forgeage. Les bords 91 sont donc globalement parallèles entre eux et ce sont eux qui sont destinés à coopérer avec les bords latéraux 25 des ouvertures 23.

Cette colonnette 41 subit ici une opération de trempe et de revenu pour son durcissement.

On notera que la face 64 permet de manière connue en soi au diaphragme 2 de pivoter, la colonnette 41 étant immobilisée axialement du fait de l'épaulement 51 et de la déformation du pied traversant une ouverture associée pratiquée dans le fond 11.

Bien entendu en variante (figure 9) la face supérieure 162 peut être entaillée au niveau de sa zone de raccordement avec la face arrière 61.

Ainsi il apparaît à la figure 9 un chanfrein 163 de raccordement de la face arrière 61 avec la face supérieure 162 de la colonnette 41. Ce chanfrein permet de réduire l'épaisseur de la colonnette à cet endroit, ce qui limite les interférences avec la face arrière 33 du plateau de pression et permet donc un gain de place.

Bien entendu l'extrémité libre du pied 50 peut être entaillée (figure 9) pour faciliter le rivetage.

La colonnette 41 peut être en deux parties (figures 10 à 12) et présenter un rivet 150 non durci et une partie monobloc 142,190 durcie présentant la portion de guidage (et de centrage) et la portion d'appui pour le diaphragme 2 (pour la rondelle Belleville 21 de celui-ci).

Le rivet 150 est propre à traverser une ouverture 101 pratiquée dans la partie monobloc 142,190.

Cette partie présente au niveau de sa face dorsale 61, tournée vers le plateau 3, un évidement 100 prolongeant le trou 101 en formant l'extrémité de celui-ci.

Cet évidement 100 est adapté à la taille de la tête du rivet 150.

Ainsi la tête du rivet 150 est logée dans un logement 100 et ne fait pas saillie par rapport à la face dorsale 61 de la partie monobloc 190,142.

Cette partie monobloc présente une partie de guidage 190 de taille réduite avec deux méplats globalement parallèles entre eux, référencés ici en 191, pour coopération avec les bords latéraux parallèles 25 des ouvertures 23.

Cette partie de guidage est monobloc avec la tête 142 de la colonnette 41, une zone de raccordement 193 existant comme précédemment entre ladite portion de guidage et la face avant 164 de la tête 142.

On notera que cette face 164 est ici plane en s'étendant transversalement et parallèlement à la face arrière ou dorsale 61 de la tête 142. Bien entendu la face 164 peut être conique.

Cette tête présente dans sa partie supérieure une partie arrondie 63 en forme de bourrelet comme à la figure 6 pour offrir l'appui secondaire au diaphragme.

La face supérieure de la tête 142 est entaillée à l'arrière comme à la figure 9.

Le bord inférieur 165 de la tête 142 est raccordé par deux zones arrondies 167 à l'appui de basculement 63.

On notera que ce bord 165 est adjacent à la zone de raccordement 193 en sorte que la taille de la tête 142 est réduite en hauteur et ce dans sa partie basse.

Ainsi un gain de place est réalisé permettant le logement d'un disque de friction 70 plus important.

Cette disposition est particulièrement avantageuse car la partie monobloc 142,190 peut être durcie de manière séparée par rapport au rivet 150.

Ainsi on peut écraser de manière aisée le pied du rivet 150 lors de son sertissage conduisant à immobiliser la partie monobloc 142,190 entre le fond 11 du couvercle et la tête du rivet 150, monté dans le logement 100 permettant la création d'un épaulement.

Grâce à cette disposition, on peut serrer élastiquement le diaphragme entre son appui primaire 43 et la tête 142, le rivet 150 ne subissant que des efforts de traction.

Grâce à la réalisation en deux parties il est possible de donner une forme quelconque à la tête 142.

On notera qu'ici la face 164 peut être transversale car la partie monobloc pénètre toute entière par sa partie basse dans les ouvertures 23, sa partie haute 63 faisant saillie radialement par rapport à ladite ouverture.

Bien entendu la présente invention n'est pas limitée à l'exemple de réalisation décrit. En particulier le couvercle peut être en matière plastique renforcée par des fibres.

Il est possible de monter le diaphragme 2 à l'extérieur du couvercle comme à la figure 4 du document FR-A-1 524 350. Dans ce cas, le couvercle est plat et la tête de l'entretoise forme l'appui primaire du diaphragme. Dans tous les cas, les colonnettes 41 présentent une tête profilée pour offrir un appui à la partie périphérique en forme de rondelle Belleville du diaphragme 2.

L'embrayage peut comporter deux plateaux de pression et donc deux disques de friction.

Le trou 9 peut avoir une autre forme, cela dépendant de la profondeur du couvercle 1 entourant ici entièrement le plateau de pression 3 et le diaphragme 1.

Le diaphragme 1 peut avoir des doigts à extrémité interne bombée (figure 10). Ces doigts peuvent s'étendre entièrement dans le prolongement de sa rondelle Belleville.

On notera, d'une part que les colonnettes 41 à têtes 42,142 et, d'autre part, que la forme du diaphragme avec des doigts 22 (figures 1 et 10) favorisent une réduction de l'épaisseur du mécanisme et donc de la taille notamment axiale des trous de montage.

La présence de crochets de rappel 5 n'est pas obligatoire.

## Revendications

1. Mécanisme d'embrayage à diaphragme, notamment pour véhicule automobile, comportant un couvercle (1) propre à être rapporté sur le plateau de réaction (80) de l'embrayage, un diaphragme (2) monté sur le couvercle par l'intermédiaire de moyens de pivotement (4) assujettissant de manière pivotante le diaphragme au couvercle, un plateau de pression (3) lié en rotation au couvercle (1) tout en étant monté mobile axialement par rapport à celui-ci par l'intermédiaire de moyens d'attelage (8) tels que des languettes élastiques tangentielles (8), dans lequel le couvercle (1) présente un fond (11) portant des colonnettes (41) appartenant aux moyens de pivotement (4), lesdites colonnettes présentant un pied (50,150) pour fixation de la colonnette (41) audit fond (11), une portion de guidage (90,190) de forme annulaire destinée à coopérer avec les bords latéraux (25) d'orifices élargis (23) de forme globalement rectangulaire, que présente le diaphragme (2) pour passage des colonnettes (41), et une tête (42,142) profilée pour offrir un appui à la partie périphérique, en forme de rondelle Belleville (21), que présente le diaphragme (2), caractérisé en ce que ladite portion de guidage (90,190) est entaillée pour formation de deux bords latéraux (91,191) globalement en forme de méplats coopérant avec les bords latéraux (25) des orifices élargis (23) du diaphragme (2) et en ce que ladite portion de guidage est durcie.

2. Mécanisme selon la revendication 1, caractérisé en ce que la portion de guidage (90,190) comporte en section deux bords latéraux (91,191) globalement parallèles entre eux en forme de méplats raccordés entre eux par deux bords semi-circulaires (92).

3. Mécanisme selon la revendication 1 ou 2, caractérisé en ce que la colonnette (41) est en deux parties et présente un rivet (150) et une partie monobloc (142,182) présentant la portion de guidage (190).

4. Mécanisme selon la revendication 3, caractérisé en ce que le rivet (150) est propre à traverser un trou (101) pratiqué dans la partie monobloc (182,190).

5. Mécanisme selon la revendication 4, caractérisé en ce que la partie monobloc (182,190) présente un évidement (100) prolongeant ledit trou pour logement de la tête du rivet (150).

6. Mécanisme selon l'une quelconque des revendications 1 à 5, caractérisé en ce que la partie monobloc (182,190) est durcie et présente une portion d'appui pour la rondelle Belleville (21) du diaphragme (2).

7. Mécanisme selon l'une quelconque des revendications 1 à 6, caractérisé en ce que la tête (42,142) présente dans sa partie supérieure une partie arrondie (63) en forme de bourrelet pour offrir un appui au diaphragme (2).

8. Mécanisme selon la revendication 7, caractérisé en ce que la face supérieure (62,162) de la tête (42, 142) de la colonnette (41) est entaillée au niveau de sa zone de raccordement avec la face arrière (61) de ladite tête.

## Claims

1. Diaphragm clutch mechanism, notably for a motor vehicle, having a cover (1) able to be attached to the reaction plate (80) of the clutch, a diaphragm (2) mounted on the cover by means of pivoting means (4) pivotally connecting the diaphragm to the cover, a thrust plate (3) rotatably connected to the cover (1) whilst being mounted so as to be able to move axially with the respect to the latter by means of coupling means (8) such as tangential elastic tongues (8), in which the cover (1) has a base (11) carrying small columns (41) belonging to the pivoting means (4), the said small columns having a foot (50, 150) for fixing the small column (41) to the said base (11), an annular-shaped guide portion (90, 190) intended to cooperate with the lateral edges (25) of broadened orifices (23) of roughly rectangular shape, which the diaphragm (2) has for the small columns (41) to pass, and a head (42, 142) profiled so as to offer a support to the peripheral part, in the form of a Belleville washer (21), which the diaphragm (2) has, characterised in that the said guide portion (90, 190) is cut into in order to form two lateral edges (91, 191) roughly in the form of flats cooperating with the lateral edges (25) of the broadened orifices (23) in the diaphragm (2), and in that the said guide portion is hardened.

2. Mechanism according to Claim 1, characterised in that the guide portion (90, 190) has in section two lateral edges (91, 191) roughly parallel to each other in the form of flats connected together by two semicircular edges (92).

3. Mechanism according to Claim 1 or 2, characterised in that the small column (41) is in two parts and has a rivet (150) and a single-piece part (142, 182) exhibiting the guide portion (190).

4. Mechanism according to Claim 3, characterised in that the rivet (150) is able to pass through a hole (101) formed in the single-piece part (182, 190).

5. Mechanism according to Claim 4, characterised in that the single-piece part (182, 190) has a recess (100) extending the said hole in order to house the head of the rivet (150).

6. Mechanism according to any one of Claims 1 to 5, characterised in that the single-piece part (182, 190) is hardened and has a support portion for the Belleville washer (21) of the diaphragm (2).

7. Mechanism according to any one of Claims 1 to 6, characterised in that the head (42, 142) has in its top part a rounded part (63) in the form of a protrusion for offering a support for the diaphragm (2).

8. Mechanism according to Claim 7, characterised in that the top face (62, 162) of the head (42, 142) of the support column (41) is cut into at its area of connection with the rear face (61) of the said head.

## Patentansprüche

1. Membranfeder-Kupplungsmechanismus, insbesondere für Kraftfahrzeuge, umfassend einen Deckel (1), der an der Gegenanpreßplatte (80) der Kupplung angebracht werden kann, eine Membranfeder (2), die am Deckel anhand von Schwenkmitteln (4) gelagert ist, die die Membranfeder schwenkbar am Deckel befestigen, eine Druckplatte (3), die drehfest mit dem Deckel (1) verbunden und axial beweglich im Verhältnis zu diesem gelagert ist, was durch Anfügemittel (8), wie etwa tangentiale elastische Zungen (8), erfolgt, wobei der Deckel (1) einen Boden (11) aufweist, der Distanzbolzen (41) trägt, die zu den Schwenkmitteln (4) gehören, wobei die besagten Distanzbolzen einen Fuß (50, 150) zur Befestigung des Distanzbolzens (41) an dem besagten Boden (11), einen ringförmigen Führungsabschnitt (90, 190), der für das Zusammenwirken mit den Seitenkanten (25) von erweiterten Öffnungen (23) mit insgesamt rechteckiger Form bestimmt ist, die die Membranfeder (2) für den Durchgang der Distanzbolzen (41) aufweist, und einen profilierten Kopf (42, 142) aufweisen, um eine Auflage für den Umfangsteil in Form einer Tellerfeder (21) zu schaffen, den die Membranfeder (2) aufweist, **dadurch gekennzeichnet,** daß der besagte Führungsabschnitt (90, 190) eingekerbt ist, um zwei insgesamt in Form von Abflachungen ausgeführte Seitenkanten (91, 191) zu bilden, die mit den Seitenkanten (25) der erweiterten Öffnungen (23) der Membranfeder (2) zusammenwirken, und daß der besagte Führungsabschnitt gehärtet ist.

2. Mechanismus nach Anspruch 1 , **dadurch gekennzeichnet,** daß der Führungsabschnitt (90, 190) im Querschnitt zwei insgesamt zueinander parallele Seitenkanten (91, 191) in Form von Abflachungen umfaßt, die durch zwei halbkreisförmige Kanten (92) aneinander angeschlossen sind.

3. Mechanismus nach Anspruch 1 oder 2 , **dadurch gekennzeichnet,** daß der Distanzbolzen (41) aus zwei Teilen besteht und einen Niet (150) und einen einstückigen Teil (142, 182) aufweist, der den Führungsabschnitt (190) enthält.

4. Mechanismus nach Anspruch 3 , **dadurch gekennzeichnet**, daß der Niet (150) durch ein Loch (101) hindurchgehen kann, das in den einstückigen Teil (182, 190) eingearbeitet ist.

5. Mechanismus nach Anspruch 4 , **dadurch gekennzeichnet,** daß der einstückige Teil (182, 190) eine Aussparung (100) aufweist, die das besagte Loch verlängert, um den Kopf des Niets (150) aufzunehmen.

6. Mechanismus nach einem der Ansprüche 1 bis 5, **dadurch gekennzeichnet,** daß der einstückige Teil (182, 190) gehärtet ist und einen Auflageabschnitt für die Tellerfeder (21) der Membranfeder (2) aufweist.

7. Mechanismus nach einem der Ansprüche 1 bis 6, **dadurch gekennzeichnet,** daß der Kopf (42, 142) in seinem oberen Teil einen wulstförmigen abgerundeten Teil (63) aufweist, um eine Auflage für die Membranfeder (2) zu schaffen.

8. Mechanismus nach Anspruch 7, **dadurch gekennzeichnet**, daß die Oberseite (62, 162) des Kopfes (42, 142) des Distanzbolzens (41) in Höhe ihres Anschlußbereichs an die Rückseite (61) des besagten Kopfes eingekerbt ist.
